# EUROPÄISCHE PATENTANMELDUNG

(11) **EP 1 990 751 A1**
(43) Veröffentlichungstag der Anmeldung: **12.11.2008**
(21) Anmeldenummer: 07009498.2
(22) Anmeldetag: 11.05.2007
(51) Int. Cl.: G06F 21/00

(54) **Verfahren zum digitalen Signieren und/oder Verschlüsseln einer auf einer Datenverarbeitungseinheit gespeicherten Datei**

(71) Anmelder: Secunet Security Networks Aktiengesellschaft, 45128 Essen (DE)
(72) Erfinder: Hesse, Johan, Dipl. Mathematiker, 22337 Hamburg (DE); Reimer, Dirk, Dipl. Informatiker, 23898 Wentorf AS (DE); Wappenschmidt, Armin, Dipl. Informatiker, 4316 Hellikon (CH)
(74) Vertreter: Rohmann, Michael

(57) **Zusammenfassung**

Es handelt sich um ein Verfahren zum digitalen Signieren und/oder Verschlüsseln einer auf einer Datenverarbeitungseinheit gespeicherten Datei, wobei an zumindest eine Schnittstelle der Daten verarbeitenden Einheit eine Signatureinheit als Peripheriegerät angeschlossen wird, wobei die Signatureinheit für die Daten verarbeitende Einheit ausschließlich ein Speichermedium bildet, welches zumindest einen ersten Speicher und einen zweiten Speicher aufweist, wobei die Daten verarbeitende Einheit die zu bearbeitende Datei in dem ersten Speicher der Signatureinheit ablegt, wobei die Signatureinheit die Datei (unabhängig von der Daten verarbeitenden Einheit) signiert und/oder verschlüsselt und die signierte und/oder verschlüsselte Datei in dem zweiten Speicher ablegt und wobei die Daten verarbeitende Einheit die signierte und/ oder verschlüsselte Datei aus dem zweiten Speicher in die Daten verarbeitende Einheit lädt.

## Beschreibung

Die Erfindung betrifft ein Verfahren zum digitalen Signieren und/oder Verschlüsseln einer auf einer Daten verarbeitenden Einheit gespeicherten Datei. Datenverarbeitende Einheit meint einen Rechner bzw. Computer, z.B. einen Personalcomputer oder dergleichen. Die digitale bzw. elektronische Signatur soll z.B. bei der Abwicklung elektronischer Geschäfte oder dergleichen gewährleisten, dass sich ein digitales Dokument bzw. eine Datei zweifelsfrei einer natürlichen oder juristischen Person zuordnen lässt. Darüber hinaus soll mit Hilfe digitaler Signaturen aber auch die Integrität einer Datei bzw. eines Dokumentes sichergestellt werden, d.h. es soll gewährleistet sein, dass ein elektronisch vorhandenes Dokument nicht mehr unerkannt geändert werden kann. Jede noch so kleine Änderung an einem einmal digital signierten Dokument muss erkennbar sein. Die Fähigkeit, Änderungen an einem Dokument zu erkennen, wird z.B. durch ein mathematisches Verfahren realisiert, das auf dem Verfahren der "Public-Key-Verschlüsselung" basiert. Um digitale Signaturen erstellen zu können, müssen demnach private Schlüssel verwendet werden. Die privaten Schlüssel sind extrem schützenswert, da eine Kompromittierung eines privaten Schlüssel die Kompromittierung aller mit diesem Schlüssel signierten Dokumente bedeuten kann. Daher werden private Schlüssel häufig in besonders gesicherten Umgebungen bzw. Geräten, z.B. Chipkarten, gespeichert. Diese Geräte sorgen dafür, dass die vertraulichen Informationen des privaten Schlüssels nicht bekannt werden können.

Aus der Praxis ist es daher bekannt, zum Signieren eines auf einem Rechner gespeicherten Dokumentes eine Chipkarten-Lesevorrichtung an diesen anzuschließen, um dann die Signierung mit Hilfe der Chipkarte, auf welcher der private Schlüssel gespeichert ist, vornehmen zu können. Da die Chipkarten üblicherweise nicht direkt von einem Computer angesprochen bzw. ausgelesen werden können, werden in der Praxis Chipkarten-Lesevorrichtung bzw. Chipkarten-Leser eingesetzt, die über ein definiertes Protokoll (PC/SC) die Kommunikation zwischen dem Rechner (Rechner-Betriebssystem) und der Chipkarte übernehmen. Obwohl in der Praxis eine Vielzahl von Chipkarten-Lesevorrichtungen mit einheitlichem Protokoll (PC/PS) betrieben werden, lassen sich verschiedene Chipkarten-Lesevorrichtungen nicht ohne weiteres mit unterschiedlichen Betriebssystemen betreiben. Aus diesem Grunde ist es regelmäßig erforderlich, zum Betrieb eines Chipkarten-Lesers einen entsprechenden Treiber auf dem Rechner zu installieren. Dieses setzt üblicherweise eine gewisse administrative Berechtigung zur Installation des Treibers voraus. Eine solche ist in der Praxis nicht immer gegeben, so dass der Einsatz bekannter Chipkarten-Lesevorrichtungen begrenzt ist. - Hier setzt die Erfindung ein.

Der Erfindung liegt das technische Problem zugrunde, ein Verfahren zum digitalen Signieren und/oder Verschlüsseln einer auf einer Daten verarbeitenden Einheit gespeicherten Datei zu schaffen, welches auf verschiedensten Rechnersystemen bzw. mit verschiedensten Betriebssystemen flexibel einsetzbar ist, ohne dass z.B. Chipkarten spezifische Treiber installiert werden müssen. Außerdem soll eine geeignete Signatureinheit für ein derartiges Verfahren angegeben werden.

Zur Lösung dieser Aufgabe lehrt die Erfindung ein Verfahren zum digitalen Signieren und/oder Verschlüsseln einer auf einer Daten verarbeitenden Einheit gespeicherten Datei,
wobei an zumindest eine Schnittstelle der Daten verarbeitenden Einheit eine Signatureinheit als Peripheriegerät angeschlossen wird,
wobei die Signatureinheit für die Daten verarbeitende Einheit ausschließlich ein Speichermedium bildet, welches zumindest einen ersten Speicher und zumindest einen zweiten Speicher aufweist,
wobei die Daten verarbeitende Einheit die zu bearbeitende Datei in dem ersten Speicher der Signatureinheit ablegt,
wobei die Signatureinheit die Datei (unabhängig von der Daten verarbeitenden Einheit) signiert und/oder verschlüsselt und die signierten und/oder verschlüsselte Datei in dem zweiten Speicher ablegt und
wobei die Daten verarbeitende Einheit die signierte und/oder verschlüsselte Datei aus dem zweiten Speicher in die Daten verarbeitende Einheit lädt. Vorzugsweise ist dabei vorgesehen, dass die Signatureinheit einen die Datei signierenden bzw. verschlüsselnden Benutzer authentifiziert.

Die Erfindung geht von der Erkenntnis aus, dass die eingangs beschriebenen Probleme im Zusammenhang mit z.B. der Installation von Treibern oder auch mit der Zugriffsberechtigung vermieden werden können, wenn das Signieren bzw. das Verschlüsseln mit einer an den Rechner anschließbaren Signatureinheit erfolgt, welche nicht - wie ein herkömmlicher Chipkarten-Leser - die Installation eines spezifischen Treibers voraussetzt, sondern aus Sicht der Daten verarbeitenden Einheit ausschließlich ein Speichermedium bildet, so dass die Signatureinheit zwar als Chipkarten-Leser ausgebildet ist, sich jedoch gegenüber der Daten verarbeitenden Einheit bzw. deren Betriebssystem "lediglich" als Speichermedium identifiziert, welches von dem Betriebssystem über Standard-Schnittstellen angesprochen werden kann. Insoweit kann es sich bei den verwendeten Schnittstellen insbesondere um USB-Schnittstellen handeln, so dass die erfindungsgemäße Signatureinheit von dem Rechner als einfacher USB-Speicher identifiziert wird, welcher von dem Betriebssystem über eine Standard-Schnittstelle angesprochen werden kann. So können Standard-USB-Speicher, z.B. USB-Flash-Speicher in einem handelsüblichen Betriebssystem (z.B. Windows) ohne administrative Berechtigung installiert werden. Darüber hinaus sind in umfangreichen Rechner-Netzen, in denen ganz spezifische Berechtigungen vergeben sind, Zugriffe auf derartige Speicher üblicherweise freigegeben, so dass die erfindungsgemäße Signatureinheit bzw. das erfindungsgemäße Verfahren einwandfrei ohne Anpassungsschwierigkeiten anwendbar ist.

Ein Benutzer, welcher eine auf einem Rechner gespeicherte Datei signieren möchte, muss lediglich die z.B. mit einem Chipkarten-Leser ausgerüstete Signatureinheit - z.B. über die USB-Schnittstelle - an den Rechner anschließen. Die Installation von Treibern ist dann nicht mehr erforderlich. Der Rechner erkennt die angeschlossene Signatureinheit als "einfaches" Speichermedium, welches zumindest einen ersten Speicher und zumindest einen zweiten Speicher aufweist. Der Benutzer kann die zu bearbeitende Datei nun in üblicher Weise in diesem ersten Speicher ablegen. Mit Hilfe der Signatureinheit kann er dann diese Datei signieren und/oder verschlüsseln, ohne dass in diesem Zusammenhang auf den Rechner zugegriffen werden muss. Die signierte Datei wird dann in dem zweiten Speicher abgelegt. Auf diesen zweiten Speicher und folglich auf die signierte Datei kann dann der Benutzer - von der Daten verarbeitenden Einheit aus - wiederum in herkömmlicher Weise zugreifen, indem die Datei aus diesen Speicher gelesen wird. Die Authentifizierung bzw. Identifizierung des Benutzers erfolgt ausschließlich hinsichtlich der angeschlossenen Signatureinheit, ohne dass in diesem Zusammenhang eine Kommunikation mit dem Rechner erforderlich ist. Die Authentifizierung kann dabei über einerseits eine Chipkarte ("Besitz") und andererseits einen Pin ("Wissen") erfolgen. Nachdem der Benutzer die zu signierende Datei in dem ersten Speicher hinterlegt hat, authentifiziert bzw. identifiziert er sich an der Signatureinheit, z.B. mit Hilfe der Chipkarte und einer weiteren Authentifizierung, z.B. über eine Tastatur durch Eingabe eines Pins. Die Signatureinheit bildet folglich einen Chipkarten-Leser, der jedoch vollständig ohne spezielle Treiber betrieben werden kann, da er gegenüber dem Rechner nicht als Chipkarten-Leser arbeitet, sondern als "einfache" Speichervorrichtung.

Im Rahmen der Erfindung gelingt folglich eine installationslose und einfache Signierung bzw. Signatur von elektronischen Dokumenten. Darüber hinaus können in der Signatureinheit vertrauliche Daten gespeichert werden. Die Benutzung kann ohne administrative Berechtigung erfolgen, und zwar auf unterschiedlichen Betriebssystemen, z.B. Windows, Linux, Mac OS X usw..

Vorteilhafte Weiterbildungen werden im Folgenden erläutert.

So schlägt die Erfindung vor, dass die Daten verarbeitende Einheit und/oder die Signatureinheit einen Hash-Wert der Datei erzeugen. Derartige Hash-Werte, welche mittels Hash-Funktionen erzeugt werden, sind grundsätzlich bekannt. Es handelt sich insoweit um kryptografische Funktionen, welche als Grundlage für die Erzeugung elektronischer Signaturen in erster Linie die Integrität eines Dokumentes sicherstellen sollen. In diesem Zusammenhang schlägt die Erfindung vor, dass die Signatureinheit den Hash-Wert der Datei signiert und den signierten Hash-Wert in dem zweiten Speicher ablegt. Aus diesem zweiten Speicher lässt sich dann der signierte Hash-Wert der Datei in den Rechner auslesen und weiterverarbeiten.

Nach bevorzugter Weiterbildung schlägt die Erfindung vor, dass der erste Speicher von der Daten verarbeitenden Einheit ausschließlich beschreibbar und insbesondere nach einmaligem Speichern einer Datei nicht wieder überschreibbar ist. Eine zweite Datei kann in dem ersten Speicher erst abgelegt werden, nachdem der Speicher (von der Signatureinheit) gelöscht worden ist. Demgegenüber ist der zweite Speicher von der Daten verarbeitenden Einheit nur lesbar, es handelt sich folglich um einen "Read-Only-Memory".

Im Zuge des erfindungsgemäßen Verfahrens gibt die Signatureinheit nach Anschluss an die Daten verarbeitende Einheit den ersten Speicher für einen (einmaligen) Schreibzugriff frei, während der zweite Speicher (zunächst) für sowohl Schreibzugriffe als auch Lesezugriffe gesperrt ist. Anschließend, d.h. nach dem Ablegen der Datei in dem ersten Speicher sperrt die Signatureinheit den ersten Speicher für weitere Zugriffe der Daten verarbeitenden Einheit. Die nun in dem ersten Speicher der Signatureinheit hinterlegte Datei wird - ggf. nach Authentifizierung des Benutzers - signiert und dann in dem zweiten Speicher hinterlegt. Denn "Freigabe" und "Sperrung" der entsprechenden Speicher meint im Rahmen der Erfindung stets "Freigabe" bzw. "Sperrung" aus Sicht der Daten verarbeitenden Einheit. Innerhalb der Signatureinheit, d.h. intern, kann im Rahmen der vorgesehenen Funktion frei auf die Speicher zugegriffen werden. Nach dem Ablegen der Datei in dem ersten Speicher und ggf. nach dem Signieren der Datei gibt die Signatureinheit den zweiten Speicher nun für Lesezugriffe (der Daten verarbeitenden Einheit) frei, d.h. die signierte Datei kann nun von der Daten verarbeitenden Einheit gelesen und in beliebiger Weise weiterverarbeitet, z.B. in einem Netzwerk oder per E-Mail verschickt werden. Anschließend ist es zweckmäßig, sowohl den ersten Speicher als auch den zweiten Speicher bzw. deren Inhalte zu löschen. Erst danach wird der erste Speicher wieder für Schreibzugriffe der Daten verarbeitenden Einheit freigegeben, so dass die Signierung einer weiteren Datei erfolgen kann.

Gegenstand der Erfindung ist auch die beschriebene Signatureinheit für das Signieren und/oder Verschlüsseln einer Datei nach dem beschriebenen Verfahren. Eine solche Signatureinheit weist im Rahmen der Erfindung zumindest eine Schnittstelle, einen ersten Speicher, einen zweiten Speicher und ein Steuergerät, z.B. einen Mikro-Controller, auf. Die Schnittstelle der Signatureinheit dient dem Anschluss der Signatureinheit an eine korrespondierende Schnittstelle der Daten verarbeitenden Einheit, auf welcher die zu signierende Datei gespeichert ist. In dem ersten Speicher ist die zu signierende Datei von der Daten verarbeitenden Einheit aus speicherbar. Aus dem zweiten Speicher ist die von der Signatureinheit signierte Datei dann über die Daten verarbeitende Einheit auslesbar. Bei dem Steuergerät kann es sich z.B. um einen Mikro-Controller handeln, über welchen zumindest die Schnittstelle, der erste Speicher und der zweite Speicher sowie ggf. die im Folgenden noch beschriebenen Komponenten steuerbar sind. Vorzugsweise ist die erfindungsgemäße Signatureinheit mit einer Authentifizierungsvorrichtung für eine Authentifizierung eines Benutzers ausgerüstet, wobei eine solche Authentifizierungsvorrichtung einerseits eine Chipkarten-Lesevorrichtung und andererseits eine Eingabeeinrichtung aufweisen kann. In die Chipkarten-Lesevorrichtung ist dann beispielsweise die Chipkarte einsteckbar, auf welcher die für die Signierung erforderlichen Schlüssel gespeichert sind. Die abschließende Authentifizierung erfolgt dann ergänzend durch Identifizierung des Benutzers, z.B. durch Eingabe eines Pins über eine Tastatur. Die Authentifizierung erfolgt folglich durch einerseits "Besitz" und andererseits "Wissen". Die Identifizierung über eine Tastatur kann beispielsweise auch durch Identifizierung über biometrische Methoden ersetzt werden. In vorteilhafter Weiterbildung können die erfindungsgemäße Signatureinheit mit einer Anzeigevorrichtung, z.B. einem Display, ausgerüstet sein. Dieses dient beispielsweise der Anzeige des Dokumentennamens bzw. des Dateinamens oder auch des Hash-Codes der zu signierenden Datei.

In bevorzugter Weiterbildung ist neben dem ersten und zweiten Speicher noch ein dritter Speicher vorgesehen, welcher der Speicherung vertraulicher bzw. verschlüsselter Daten dient. Zur Optimierung der Performance wird die Verschlüsselung dabei vorzugsweise nicht vollständig durch die Chipkarte realisiert. Vielmehr wird ein hybrides Verschlüsselungsverfahren etabliert. Der komplette Inhalt des dritten Speichers wird mit einem zufälligen symmetrischen Schlüssel verschlüsselt. Dieser Schlüssel kann vom Anwender bei der Einrichtung der Signatureinheit selbst erstellt werden bzw. die Erstellung kann initiiert werden. Dieser Schlüssel wird wiederum innerhalb des dritten Speichers durch die Chipkarte verschlüsselt abgelegt. Beim ersten Zugriff auf das verschlüsselte Laufwerk bzw. dem verschlüsselten dritten Speicher muss der Benutzer das zum Verschlüsseln verwendete Zertifikat durch Eingabe der zugehörigen Pin freigeben. Der Schlüssel wird danach in einem flüchtigen Speicher innerhalb der Signatureinheit gespeichert, so dass weitere Zugriffe auf die verschlüsselten Inhalte keiner erneuten Freigabe bedürfen. Wird die Signatureinheit von der Schnittstelle, z.B. dem USB-Anschluss getrennt, so erlischt die Spannungsversorgung des flüchtigen Speichers. Nach einem erneuten Einstecken in eine Schnittstelle, z.B. in einen USB-Anschluss, muss der Zugriff auf die verschlüsselte Festplatte erst erneut freigegeben werden. Zusätzlich ist in dem Menü des Mikro-Controllers, das über die Tastatur der Signatureinheit verwendet und über die Anzeige der Signatureinheit dargestellt wird, eine Option enthalten, mit der der gecashte Schlüssel jederzeit aus dem zugehörigen Speicher entfernt werden kann.

Die beschriebenen verschiedenen Speicher können als einzelne Hardwarespeicher ausgebildet sein. Es kann sich beispielsweise um mehrere Speicherkarten, z.B. Flash-Karten oder auch unterschiedliche RAM-Bausteine handeln. Die einzelnen Speicher können jedoch auch von verschiedenen Speicherbereichen eines oder mehrerer Hardwarespeicher gebildet werden. Die Speicher können auf unterschiedlichen technischen Architekturen basieren, sind jedoch phsikalisch (fest) mit dem Gerät verbunden. Sofern im Rahmen der Erfindung von unterschiedlichen Laufwerken die Rede ist, sind üblicherweise unterschiedliche Speicher bzw. Speicherbereiche gemeint.

Bei der beschriebenen Schnittstelle handelt es sich vorzugsweise um eine USB-Schnittstelle, da eine solche in der Praxis problemlos ohne Installation speieller Treiber einsetzbar ist. Die Erfindung umfasst jedoch grundsätzlich auch Anordnungen mit anderen Schnittstellen bzw. anderen Schnittstellen-Protokollen.

Insgesamt ermöglicht das erfindungsgemäße Verfahren bzw. die erfindungsgemäße Signatureinheit die Verschlüsselung und Signatur von Dateien unabhängig von einer Installation von Software auf einem Rechner. Ist beispielsweise eine geeignete Schnittstelle, z.B. ein USB-Anschluss an einem Rechner vorhanden, an welchem USB-Speichereinrichtungen (Festplatten, USB-Sticks, USB-Karten-Leser etc), angeschlossen werden können, so kann ein Nutzer ohne Rücksicht auf das Betriebssystem des Rechnersystems Dokumente signieren und auf seine verschlüsselten Daten zugreifen. Die Verwendung ist nicht von der Installation weiterer Software abhängig und funktioniert ohne administrative Berechtigung. Dieses ermöglicht es, z.B. mit der transportablen Signatureinheit Signaturen auch auf "fremden" Rechnern vorzunehmen, z.B. in einem "Internet-Cafe" oder dergleichen. Mit der Unabhängigkeit von dem Rechner-Betriebssystem und der Architektur des Rechners ergibt sich zugleich auch eine Unabhängigkeit von der Leistung dieses Rechners. Alle rechenintensiven Aktionen werden innerhalb der Signatureinheit abgebildet, ohne dass Ressourcen des Rechners genutzt werden müssen. Zudem ist ein Anwender nicht auf bestimmte Software oder Softwareversionen auf dem Rechner angewiesen. Schließlich erfolgt vor, bei und nach der Verwendung der Signatureinheit keine Änderung der Softwarekonfiguration. Damit kann sichergestellt werden, dass der eingesetzte Rechner nach dem Einsatz der Signatureinheit in derselben Konfiguration funktioniert wie vor dem Einsatz. Zusätzlich kapselt die Signatureinheit die vertrauenswürdigen Prozessschritte einer digitalen Signatur bzw. dem Verschlüsseln von Daten aus einem Speichermedium. Die Möglichkeiten von so genannter "Malware", auf vertrauliche Informationen zugreifen zu können, sinken damit deutlich ab. Schließlich kann eine Integration in bestehende Anwendungen durch die Implementierung einer PC/SC-Schnittstelle realisiert werden, die die Signatureinheit als normalen Chipkarten-Leser gegenüber dem Betriebssystem darstellt. Die Signatureinheit selbst kann dabei über z.B. eine USB-Schnittstelle ohne separate Stromversorgung arbeiten.

Ergänzend besteht die Möglichkeit, die Signatureinheit als "Trusted Viewer" einzusetzen, indem an dem Display des Flash-Speicher basierten Chipkarten-Lesers nicht nur Dokumentennamen, dessen Hash-Werte und Bedienungsanweisungen angezeigt werden, sondern komplette Dokumente in vorher definierten Formaten. Dadurch könnte sich ein Anwender direkt davon überzeugen, dass die zu signierende Datei der originalen Datei entspricht.

Ferner besteht die Möglichkeit, die erfindungsgemäße Signatureinheit mit weiteren Funktionen auszustatten bzw. zu koppeln. Denkbar ist die Kopplung mit einem MP 3-Player.

Mit dem erfindungsgemäßen Verfahren lassen sich im Übrigen Dokumente nicht nur mit einer Signatur versehen oder verschlüsseln, sondern die Erfindung umfasst auch andere digitale Bearbeitungen, wie z.B. das Erzeugen von Zeitstempeln oder dergleichen.

Im Folgenden wird die Erfindung anhand einer ein Ausführungsbeispiel darstellenden Zeichnung näher erläutert. Es zeigen
- Fig. 1: eine erfindungsgemäße Signatureinheit in einer vereinfachten schematischen Darstellung,
- Fig. 2: den vereinfachten "internen" Aufbau der Signatureinheit gemäß Fig. 1,
- Fig. 3: ein Flussdiagramm des erfindungsgemäßen Verfahrens in einer ersten Ausführungsform und
- Fig. 4: ein Flussdiagramm einer abgewandelten Ausführungsform der Erfindung.

In den Figuren ist eine erfindungsgemäße Signatureinheit 1 für das Signieren und/oder Verschlüsseln einer Datei dargestellt. Eine solche Datei ist üblicherweise auf einer "herkömmlichen" Daten verarbeitenden Einheit, z.B. einem Computer 2 gespeichert. Die erfindungsgemäße Signatureinheit wird über eine Schnittstelle 3 an eine Schnittstelle 4 dieses Computers angeschlossen. Im Ausführungsbeispiel ist diese Schnittstelle 3, 4 als USB-Schnittstelle ausgebildet.

Die Signatureinheit 1 ist im Ausführungsbeispiel als Authentifizierungsvorrichtung mit einerseits einer Chipkarten-Lesevorrichtung 5 und andererseits einer Eingabeeinrichtung 6 ausgebildet, wobei die Eingabeeinrichtung 6 im Ausführungsbeispiel als Eingabetastatur ausgebildet ist. Ferner ist eine als Display 7 ausgebildete Anzeigevorrichtung 8 angedeutet. Die Signatureinheit 1 bildet folglich ein Peripheriegerät, welches über die dargestellten Schnittstellen 3, 4 an den Computer 2 angeschlossen wird. Sie verfügt über einen Mikrocontroller 9.

Obwohl die Signatureinheit "äußerlich" und "funktionell" einen Chipkarten-Leser darstellt, so bildet sie für die Daten verarbeitende Einheit 2 ausschließlich ein Speichermedium, welches zumindest einen ersten Speicher S1 und zumindest einen zweiten Speicher S2 aufweist. Die Signatureinheit 1 identifiziert sich folglich gegenüber dem Betriebssystem des Computers 2 als zwei oder mehrere Speichermedien, die über die auf dem Computer 2 installierten üblichen Treiber ohne weiteres angesprochen werden können. Die Installation weiterer, auf den Chipkarten-Leser 1 abgestimmter Treiber ist auf dem Computer 2 nicht erforderlich.

Denn im Rahmen der Erfindung wird nun die zu signierende Datei von einem Benutzer von dem Computer 2 in dem ersten Speicher der Signatureinheit abgelegt. Anschließend signiert bzw. verschlüsselt die Signatureinheit 1 die Datei unabhängig von dem Computer 2 und legt diese signierte bzw. verschlüsselte Datei in dem zweiten Speicher S2 der Signatureinheit 1 ab. Anschließend kann dann die Daten verarbeitende Einheit auf diesem zweiten Speicher S2 und folglich auf die signierte bzw. verschlüsselte Datei zugreifen, so dass der Benutzer dann die signierte Datei auf dem Computer 2 weiterverarbeiten bzw. weiterverwenden kann, z.B. sie innerhalb eines Netzwerkes oder auch im Internet übertragen kann.

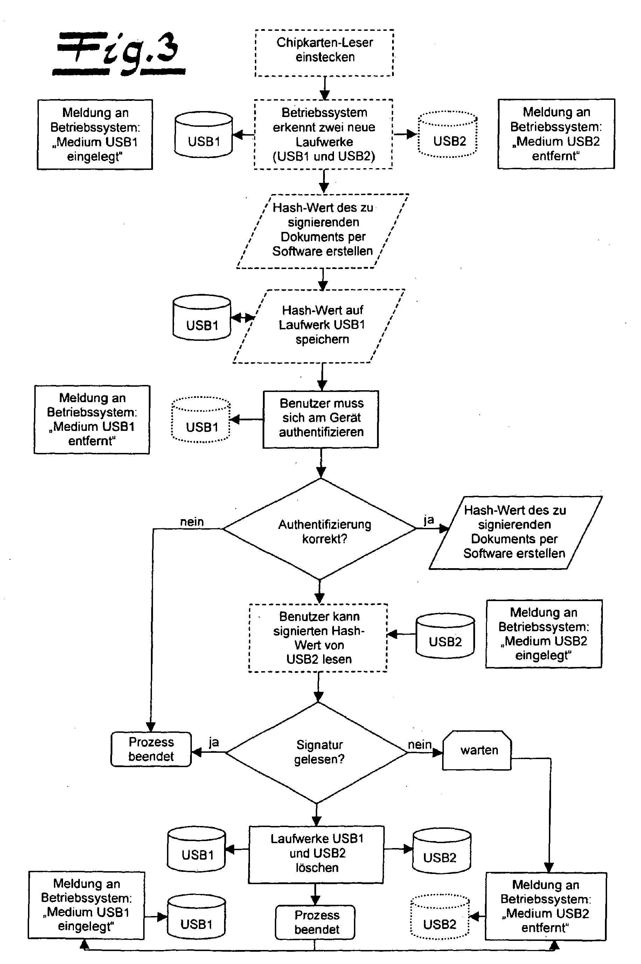

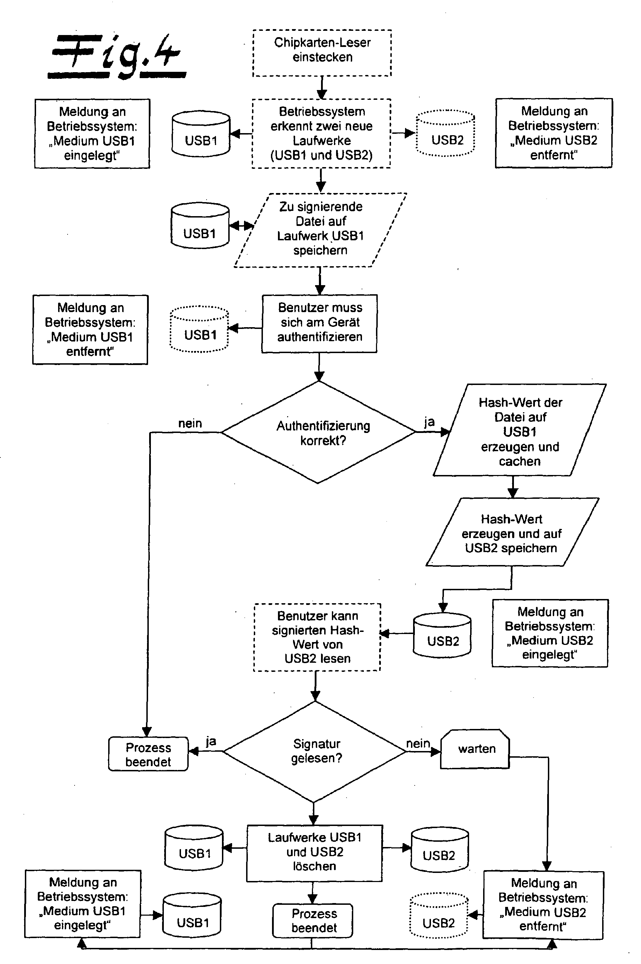

Die Funktion der erfindungsgemäßen Signatureinheit 1 soll dabei beispielhaft anhand der Fig. 3 und 4 erläutert werden. "Aktionen am Computer" sind im Rahmen dieser Grafik in "gestrichelten" Symbolen dargestellt, während "Aktionen innerhalb der Signatureinheit" in Symbolen mit durchgezogenen Linien dargestellt sind.

Die Signatureinheit 1 ist in diesem Ausführungsbeispiel als Chipkarten-Leser bezeichnet. Zunächst wird der Chipkarten-Leser 1 über seine Schnittstelle 3 in die entsprechende Schnittstelle 4 des Rechners 2 eingesteckt. Das Betriebssystem des Rechners 2 identifiziert nun erfindungsgemäß nicht einen Chipkarten-Leser, für welchen er einen speziellen Treiber benötigen würde, sondern das Betriebssystem erkennt "lediglich" zwei neue Speicher S1, S2 bzw. Laufwerke, die in diesem Ausführungsbeispiel als USB 1 und USB 2 bezeichnet sind. Der erste Speicher USB 1 ist lediglich beschreibbar, während der zweite Speicher USB 2 lediglich lesbar ist, und zwar jeweils bezogen auf den angeschlossenen Rechner. Nach Anschluss des Chipkarten-Lesers 1 erhält das Betriebssystem folglich die Meldung "Medium USB 1 eingelegt" und "Medium USB 2 entfernt". Nun kann bei der Ausführungsform nach Fig. 3 noch auf dem "externen" Rechner 2 der Hash-Wert des zu signierenden Dokumentes per Software erstellt werden. Das zu signierende Dokument bzw. dessen Hash-Wert wird nun von dem Rechner 2 auf dem ersten Speicher USB 1 der Signatureinheit 1 abgelegt. Anschließend authentifiziert sich der Benutzer an dem Gerät, z.B. durch Eingabe des Pins. Zugleich wird der zweite Speicher, nachdem er einmal beschrieben wurde, "abgekoppelt", auf dem Rechner erscheint die Meldung "Medium USB 1 entfernt". Sofern die Authentifizierung korrekt erfolgt, wird der Hash-Wert signiert und in dem zweiten Speicher USB 2 abgelegt. Nun erfolgt die Meldung auf dem Rechner "Medium USB 2 eingelegt", so dass der Benutzer die signierte Datei bzw. den signierten Hash-Wert aus dem zweiten Speicher USB 2 auslesen kann. Nachdem die Signatur ausgelesen wurde, ist der Prozess im Wesentlichen beendet. Die Signatureinheit 1 löscht noch die Speicherinhalte aus dem ersten und zweiten Speicher USB 1, USB 2. Anschließend erscheinen auf dem Rechner die "Ausgangsmeldungen", nämlich "Medium USB 1 eingelegt" einerseits und "Medium USB 2" andererseits.

Von Bedeutung ist dabei, dass in dem ersten Speicher USB 1 nur eine Datei gespeichert werden kann. Sobald diese Datei erzeugt wurde, können keine weiteren Dateien gespeichert werden. Soll eine andere Datei signiert werden, so muss zunächst die existierende Datei durch die Signatureinheit 1 gelöscht werden. Ferner können in dem ersten Speicher USB 1 vom Betriebssystem des Rechners 2 keine Dateien gelöscht werden. Der Mikro-Controller 9 der Signatureinheit 1 stellt sicher, dass eine Löschung nur durch die Signatureinheit 1 erfolgen kann. Das Laufwerk USB 1 ist damit aus Sicht des angeschlossenen Computers ein "Write-Only-Laufwerk". In dem zweiten Speicher USB 2 können von dem Betriebssystem des angeschlossenen Computers 2 aus keine Dateien erstellt werden. Das Laufwerk USB 2 ist aus Sicht des angeschlossenen Computers 2 ein "Read-Only-Laufwerk". Das Laufwerk USB 2 ist mit dem Anschließen der Signatureinheit 1 zwar vorhanden, es ist aber "kein Medium eingelegt". Die Eingabe der Pin für die Chipkarte wird direkt an der Tastatur 6 durchgeführt. Während der Signatur-Phase werden die beiden USB-Laufwerke USB 1 und USB 2 vom Betriebssystem getrennt (beispielsweise indem ein Drive-Ejected-Befehl gegeben wird). Nachdem die Signatur erstellt wurde, wird Laufwerk USB 2 dem Betriebssystem wieder zugänglich gemacht. Nachdem die Signatur erstellt wurde, der Benutzer diese Signatur vom Laufwerk USB 2 kopiert und dies auch auf dem Gerät bestätigt hat, werden von dem Gerät aus beide Festplatten USB 1 und USB 2 gelöscht. Hierbei kann bei Bedarf ein sicheres Löschverfahren verwendet werden.

Die abgewandelte Ausführungsform gemäß Fig. 4 unterscheidet sich von der Ausführungsform nach Fig. 3 lediglich dadurch, dass der Hash-Wert nicht auf dem externen Rechner 2 erzeugt wird, sondern mit der Signatureinheit 1. Von dem externen Rechner 2 wird folglich die ursprüngliche Datei in dem ersten Speicher USB 1 der Signatureinheit 1 gespeichert. Erst nach erfolgter Authentifizierung wird der Hash-Wert erzeugt. Der weitere Ablauf entspricht dem der Fig. 3.

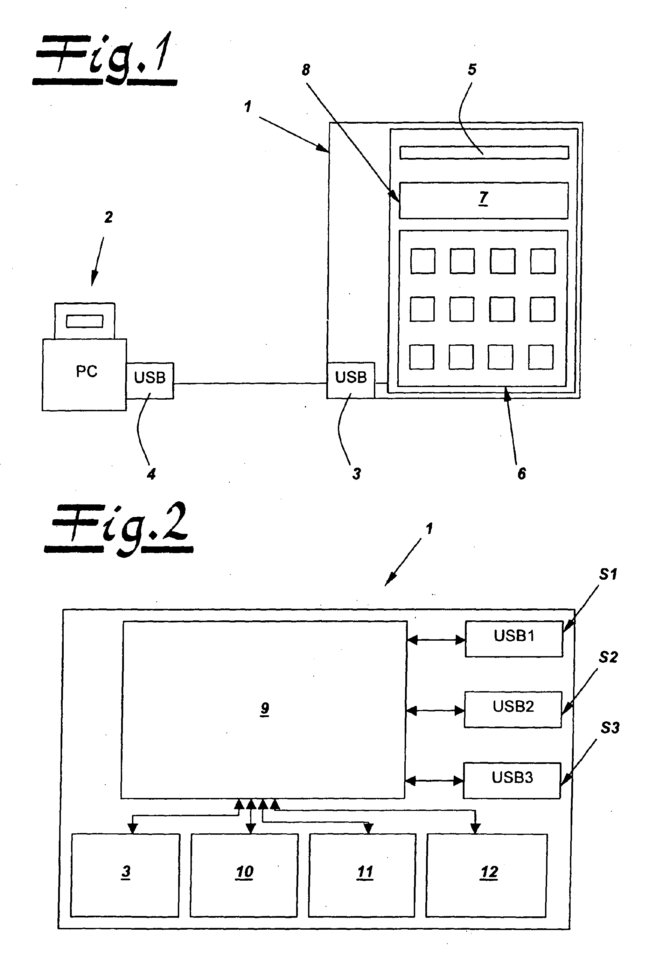

Der interne Aufbau der Signatureinheit ist in Fig. 2 angedeutet. Der dargestellte Mikro-Controller 9 verwaltet die Speicher USB 1, USB 2, USB 3 (z.B. Flash-Laufwerke) sowie die Schnittstelle 3, z.B. USB, für den Anschluss an den Rechner. Er steuert die Zugriffsmöglichkeiten (Lesen/Schreiben). Ferner ist der Mikro-Controller 9 für das Einlesen der Hash-Werte verantwortlich. Er regelt die Kommunikation mit der Chipkarte über den Leser 5 und die Anzeige am Display 7 sowie die Verschlüsselung der Daten. Angedeutet sind neben dem Mikro-Controller 9 und den drei Speichern USB 1, USB 2, USB 3 eine Standard-USB-Flash-Schnittstelle 3, eine Standard-LCD-Schnittstelle 10, eine Standard-Tastatur-Schnittstelle 11 und eine Standard-Chipkarten-Kommunikationsschnittstelle 12.

Im Übrigen ist erkennbar, dass ein dritter Speicher USB 3 für die Speicherung vertraulicher bzw. verschlüsselter Daten vorgesehen sein kann.

## Patentansprüche

1. Verfahren zum digitalen Signieren und/oder Verschlüsseln einer auf einer Datenverarbeitungseinheit gespeicherten Datei,
wobei an zumindest eine Schnittstelle der Daten verarbeitenden Einheit eine Signatureinheit als Peripheriegerät angeschlossen wird,
wobei die Signatureinheit für die Daten verarbeitende Einheit ausschließlich ein Speichermedium bildet, welches zumindest einen ersten Speicher und einen zweiten Speicher aufweist,
wobei die Daten verarbeitende Einheit die zu bearbeitende Datei in dem ersten Speicher der Signatureinheit ablegt,
wobei die Signatureinheit die Datei signiert und/oder verschlüsselt und die signierte und/oder verschlüsselte Datei in dem zweiten Speicher ablegt und
wobei die Daten verarbeitende Einheit die signierte und/oder verschlüsselte Datei aus dem zweiten Speicher in die Daten verarbeitende Einheit lädt.

2. Verfahren nach Anspruch 1, wobei die Signatureinheit einen die Datei signierenden bzw. verschlüsselnden Benutzer (unabhängig von der Daten verarbeitenden Einheit) authentifiziert.

3. Verfahren nach Anspruch 1 oder 2, wobei die Daten verarbeitende Einheit und/oder die Signatureinheit einen Hash-Wert der Datei erzeugt.

4. Verfahren nach Anspruch 3, wobei die Signatureinheit den Hash-Wert der Datei signiert und den signierten Hash-Wert in dem zweiten Speicher ablegt.

5. Verfahren nach einem der Ansprüche 1 bis 4, wobei der erste Speicher von der Daten verarbeitenden Einheit nur beschreibbar und nicht überschreibbar ist.

6. Verfahren nach einem der Ansprüche 1 bis 5, wobei der zweite Speicher von der Daten verarbeitenden Einheit nur lesbar ist.

7. Verfahren nach einem der Ansprüche 1 bis 6, wobei die Signatureinheit nach Anschluss an die Daten verarbeitende Einheit den ersten Speicher für einen Schreibzugriff freigibt und den zweiten Speicher für Schreib- und Lesezugriffe sperrt.

8. Verfahren nach einem der Ansprüche 1 bis 7, wobei die Signatureinheit nach dem Ablegen der Datei in dem ersten Speicher den ersten Speicher für die Daten verarbeitende Einheit sperrt.

9. Verfahren nach einem der Ansprüche 1 bis 8, wobei die Signatureinheit nach dem Ablegen der Daten in dem ersten Speicher und ggf. nach dem Signieren der Datei den zweiten Speicher für ausschließlich Lesezugriffe freigibt.

10. Verfahren nach einem der Ansprüche 1 bis 9, wobei die Signatureinheit den zweiten Speicher nach dem Auslesen durch die Daten verarbeitende Einheit sperrt.

11. Verfahren nach einem der Ansprüche 1 bis 10, wobei die Signatureinheit den ersten und zweiten Speicher nach dem Auslesen der signierten Datei von der Daten verarbeitenden Einheit löscht.

12. Verfahren nach einem der Ansprüche 1 bis 11, wobei die Signatureinheit als Chipkarten-Lesevorrichtung ausgebildet ist oder eine solche aufweist und wobei die Signatur mittels eines Schlüssels erzeugt wird, welcher auf einer Chipkarte gespeichert ist, die von der Signatureinheit ausgelesen wird.

13. Signatureinheit (1) für das Signieren und/oder Verschlüsseln einer Datei nach einem Verfahren der Ansprüche 1 bis 12, mit zumindest
- einer Schnittstelle (3) für den Anschluss der Signatureinheit (1) an die Daten verarbeitende Einheit (2), auf welcher die zu signierende Datei gespeichert ist,
- einem ersten Speicher (S1. USB 1), in welchem die zu signierende Datei von der Daten verarbeitenden Einheit (2) ablegbar ist,
- einem zweiten Speicher (S2. USB 2), aus welchem die von der Signatureinheit (1) signierte Datei auslesbar ist und
- einem Steuergerät (9), z.B. einem Mikro-Controller, für zumindest die Schnittstelle (3), den ersten Speicher und/oder den zweiten Speicher.

14. Signatureinheit (1) nach Anspruch 13, mit einer Authentifizierungsvorrichtung für die Authentifizierung eines Benutzers.

15. Signatureinheit nach Anspruch 14, wobei die Authentifizierungsvorrichtung eine Chipkarten-Lesevorrichtung (5) aufweist.

16. Signatureinheit nach Anspruch 14 oder 15, wobei die Authentifizierungsvorrichtung eine Eingabeeinrichtung (6) für eine Benutzerauthentifizierung aufweist.

17. Signatureinheit nach Anspruch 16, wobei die Eingabeeinrichtung (6) als Tastatur ausgebildet ist.

18. Signatureinheit nach einem der Ansprüche 13 bis 17, mit einer Anzeigevorrichtung (8), z.B. einem Bildschirm, Display oder dergleichen.

19. Signatureinheit nach einem der Ansprüche 13 bis 18, wobei die Schnittstelle (3) als USB-Schnittstelle ausgebildet ist.

20. Signatureinheit nach einem der Ansprüche 13 bis 19, mit einem dritten Speicher (USB 3), auf welchem vertrauliche bzw. verschlüsselte Daten speicherbar sind.

21. Signatureinheit nach einem der Ansprüche 13 bis 20, wobei der erste Speicher (S1, USB 1) und der zweite Speicher (S2, USB 2) sowie ggf. der dritte Speicher (USB 3) als separate Hardwarespeicher ausgebildet sind.

22. Signatureinheit nach einem der Ansprüche 13 bis 20, wobei der erste Speicher (S1, USB 1) und der zweite Speicher (S2, USB 2) sowie ggf. der dritte Speicher (USB 3) von verschiedenen Speicherbereichen eines einzigen Hardwarespeichers gebildet werden.
